# EUROPEAN PATENT APPLICATION

(11) **EP 2 752 765 A1**
(43) Date of publication of application: **09.07.2014**
(21) Application number: 13305012.0
(22) Date of filing: 08.01.2013
(51) Int. Cl.: G06F 9/44, H04L 29/08

(54) **Method of providing a cloud-based application**

(71) Applicant: Alcatel Lucent, 75007 Paris (FR)
(72) Inventor: Sienel, Jürgen, 71229 Leonberg (DE); Kopp, Dieter, 75428 Illingen (DE); Rähmer, Silke, 75428 Illingen (DE)
(74) Representative: MERH-IP Matias Erny Reichl Hoffmann

(57) **Abstract**

This document relates to a terminal device and a method of providing a cloud-based application to one or more terminal devices of a user. The method comprises deploying a device specific user interface application (4) on a terminal device (3) of the user, and retrieving, by the user interface application (4), a terminal device independent interface description (7) for a cloud-based application (6), where-in the interface description (7) describes access to and interaction with the cloud-based application (6) from a terminal device (3) for a plurality of user interaction modalities. The method further comprises creating, by the user interface application (4), a user interface on the terminal device for interacting with the cloud-based application based on the retrieved interface description (7) and user interface capabilities of the terminal device (3); and accessing the cloud-based application (6) from the terminal device (3) through the created user interface and the user interface application (4).

## Description

This document relates to a terminal device and a method of providing a cloud-based application to one or more terminal devices of a user.

Modern operating system are provided for a range of mobile, home and office devices including smart-phones, tablet computers, television sets, laptop and desktop PCs and other devices often belonging to the same end-user. A mobile application (or mobile app, hereinafter also referred to as app) is a software application designed to run on such devices. Mobile applications are available through application distribution platforms, which are typically operated by the supplier of the mobile operating system. Mobile apps were originally offered for general productivity and information retrieval, including email, calendar, contacts, and stock market and weather information. However, public demand and the availability of developer tools drove rapid expansion into other categories, such as mobile games, factory automation, navigation and other location-based services, banking, order-tracking, and ticket purchases to name only a few examples.

Usually, such mobile applications are downloaded from a specific platform to a target terminal device, such as different types of smart phones, but they could also be downloaded to less mobile computers, such as laptops or desktops. The strong increase in number and variety of smartphone types and operating systems made the development of mobile applications a challenge. Developers that want to provide an application to multiple mobile devices need to program the app for each device individually, because each device provides a different user-interface application programming interface (API). Thus, apps available for Iphone®, Ipad®, or any Android /Windows 8® apps are always device dependent.

This makes it tedious to deploy services in a short timeframe to a broad community of users. Furthermore, apps require forking of the software versions in the code-base for each device as update cycles of operating system features etc. differ from device to device.

On the other hand, more and more apps use back-end functionality provided by servers in the network to support those parts of the application that would overly use the resources of the mobile device. Such so-called "cloud enabled" applications can be accessed from different devices as a Software as a Service (SaaS) functionality. The application provider has complete control of the system and can handle dynamic scaling and updates of the functionality without interaction to the end-user system. Other deployment models include Platform as a Service (PaaS), wherein the provider offers resources, programming interfaces and development tools to create their own services on top. Cloud resources also can be offered as virtual Infrastructure (computing, network or storage) as a Service (laas) where the provider exposes the virtual appliances. Cloud computing is a metaphor used by technology or IT services companies for the delivery of computing requirements as a service to a community of end-recipients. Cloud computing entrusts services (typically centralized) with a user's data, software and computation on a published application programming interface (API) over a network. It has considerable overlap with Software as a Service (SaaS). End users access cloud-based applications through a web browser or a light weight desktop or mobile app while the business (back-end) software and data are stored on servers at a remote location. Cloud application providers strive to give the same or better service and performance than if the software programs were installed locally on end-user computers.

In deployments of cloud enabled applications known in the art, the user interface elements are either implemented via a web-browser or by providing for each application a specific front-end. While web-browsers are generic they have limited access to the device's specific input and output capabilities, which could support the interaction with a service, like speech-recognition or gestures that the application layer would be able to interpret. Specific front-ends on the other hand, keep the drawback of individual applications which need to be developed for each type of terminal device and each application individually, because terminal devices provide different user-interface APIs.

In view of the above problems of the prior art, there is a need to provide a more effective method of providing a cloud-based application to a plurality of different terminal devices.

A method of providing a cloud-based application to one or more terminal devices of a user is proposed. The application is a software application designed to run on smartphones, tablet computers and other devices as described above, but could also be accessed through a web browser or executed by less mobile computers, such as laptops or desktops, or even on a television set or other appliances. The method comprises the step of deploying a device specific user interface application on a terminal device of the user. This user interface application is generic in the sense that it does not comprise any specific business logic, such as email, calendar, contacts, stock market trading, weather information, factory automation, GPS and location-based services, banking, order-tracking, etc. Instead, the user interface application is designed to interact with a cloud-based application providing these kinds of functionality. The deployed user interface application is, however, device specific in that the user interface application is configured to include knowledge on the available device capabilities, in particular the device APIs and the available user interaction modalities of the device, and to interact with the device resources such as hardware components, 10 components, operating system, APIs.

The method further comprises the step of retrieving, by the user interface application, a terminal device independent interface description for a cloud-based application, wherein the interface description describes access to and interaction with the cloud-based application from a terminal device for a plurality of user interaction modalities. The cloud-based application is an application stored and executed in a remote location from the terminal device, typically on one or more servers in the cloud. The interface description may include a description of the communication with the cloud-based application. It may include a description of input and output events that the cloud-based application is expecting and is able to handle. These input and output events may use multiple user interaction modalities, e.g. input or output via text or speech.

The method further comprises the step of creating or configuring, by the user interface application, a user interface on the terminal device for interacting with the cloud-based application based on the retrieved interface description and user interface capabilities of the terminal device. The user interaction received through the configured or created user interface may then be mapped to a command of the cloud-based app based on the retrieved interface description. The method further comprises accessing the cloud-based application from the terminal device through the created user interface and the user interface application, e.g. by transmitting a command or request to the cloud-based app. In a similar way, the user interface application on the terminal device may receive a command from the cloud-based back-end, which is mapped based on the retrieved interface description of the app into one or more device specific instructions for operating the user interface on the terminal device.

Typically, the complete business logic, i.e. the application specific processing, is executed in the cloud on one or more back-end servers. Only terminal device type dependent processing such as native input/output functions and the mapping between native input/output functions and the device type independent interface description of the app are performed on the terminal device. Thus, the app developer can focus on developing the back-end consisting of the business logic and the data handling functions in the usual way. This functionality could run in dedicated servers or a cloud-based infrastructure. However, instead of implementing a specific interface for each device resulting in different versions of the app for different device APIs, the invention allows to decouple the business logic from the device specific interface adaptation by providing a generic user interface application for each terminal device type which can be used for executing the front end and providing the user interface for a plurality of cloud-based back-ends. Furthermore, a user interface description for the respective cloud-based app is provided so that the user interface application can create a user interface for the cloud-based app on the respective terminal device. This has the advantage that the complexity of app development is significantly reduced and that the application can run anywhere in the cloud. The application front end (i.e. the user interface application) can run on many different terminal devices which may provide rather different user interface capabilities. For example, a mobile terminal like a tablet computer may provide a gyroscope or acceleration sensor to control a cursor, while a television set may provide a remote control with cursor keys. The input of these input devices is mapped by the user interface application to the device type independent interface description of the app and respective commands for the cloud-based app are generated and communicated to the back-end server in the cloud. In the other direction, an output command received from the cloud-based app is mapped by the user interface application to an appropriate output device of the terminal device. For example, the output may be mapped as text to a display unit of a desktop computer, or forwarded to a text-to-speech unit for voice output, depending on what type of terminal device the user interface application is executing.

In accordance with an aspect, the terminal device independent interface description for the cloud-based application is provided in a descriptive format (e.g. in a XML file). For each interaction modality that the cloud-based application expects and/or can handle, the available interaction steps and event handlers are described in the interface description. The user interface application may use the interface description for the cloud-based application to map input received via local input units on the terminal device to an input event that the cloud-based application expects.

In accordance with an aspect, the method may further comprise controlling interaction between the user interface application and the cloud-based application using an event driven programming model. A user interaction which is recognized by the event driven programming model may trigger an event handler in the user interface application which then provides means to communicate with the cloud-based application to invoke the requested application function. The user interaction may be associated, based on the interface description for the cloud-based application, with an appropriate event handler which for example then sends a corresponding command to the cloud-based app when the expected user event is detected.

In accordance with a further aspect, the user interaction (e.g. user input events) received through the configured user interface may be mapped to a generic terminal device independent user interaction described in the retrieved interface description. The generic terminal device independent user interaction may then be mapped to a command of the cloud-based application which can then be transmitted to the back-end server. This allows abstraction and device independence of the back-end.

Moreover, it is proposed that a plurality of cloud-based applications are provided and the user interface application creates a different user interface on the terminal device for each one of the plurality of cloud-based applications based on the user interface capabilities of the device and the retrieved interface description for each one of the plurality of cloud-based applications. In other words, the user interface application is generic and can be used to provide the terminal device user interface for each of the plurality of cloud-based applications. Thus, it is sufficient to provide one user interface application on a terminal device which can be configured, by retrieved interface descriptions, to generate the front end and user interface for the cloud-based applications.

In order to access the cloud-based application from a plurality of different terminal devices belonging to the same user, a device specific user interface application may be deployed on each of a plurality of terminal devices of the user. When a user logs in at one of the plurality of terminal devices, the method may further comprise determining, by the respective user interface application, the remote cloud-based applications that are available to the user based on user information (such as a user profile). The method may then continue by creating the user interfaces for the available cloud-based applications based on the retrieved interface description for each one of the plurality of available cloud-based applications. This has the advantage that a user does not have to purchase, download and install different version of the same app on different terminal devices. Instead, a generic user interface application is provided for each of his terminal devices. The user interface application specific to each type of terminal device is configured to determine the apps of the user that are stored in the cloud, to retrieve the user interface information for each app and to automatically adapt the user interface for each app on the respective terminal devices that is momentarily used. Each app can then be accessed from each terminal device with a user interface that is adapted to the specific device capabilities.

In response to information on a user input received at the cloud-based application from the user interface application (such as a received command), the method may further comprise transmitting output data and a presentation format for a next interaction step from the cloud-based application to the user interface application. The method may then convert the received output data into a user output by the user interface application based on the received presentation format. In a similar way, a request for user input and a corresponding presentation format may be transmitted from the cloud-based app to the terminal device where the user interface application may then use the received presentation format to convert the user input request into a user interface representation that is appropriate for the terminal device and its input/output capabilities. Thus, the presentation format for each interaction step is centrally provided by the cloud-based app in a device independent format and converted into a device specific input/output format by the user interaction application.

By way of example, the user interface application may receive the interface description from the cloud-based application via a communications network. The communication network may be fixed wire line network, e.g. IP-based and comprising e.g. a DSL and/or a WLAN link, or a wireless network e.g. such as according to GSM/GPRS, EDGE, UMTS, LTE.

In accordance with an aspect, the user interface application may create the user interface on the terminal device for interacting with the cloud-based application based on user interface modalities that are available on the terminal device. By way of example, the user interface description of the cloud-based app may describe the interaction with the cloud-based app using a gestic and/or haptic input via a touch screen, or a normal text input using a keyboard or a voice input using voice recognition. If the specific terminal device has no voice input capabilities, then the user interface application adapts the user interaction with the cloud-based app to exclude the voice input modality. In other words, the user interface application connects the user interface events and/or modalities that the cloud-based app expects and can handle with the user interface capabilities that the particular terminal device provides. For example, using a device capability description, the user interface application creates a mapping table for linking input/output events on the device with user interface events and/or modalities specified by the app in the app interface description (e.g. in a descriptive format such as XML).For example, if the terminal device does not have a speech recognizer, but has a microphone and enough bandwidth to communicate with a network server, then it might be possible to use a cloud resource managed by the user interface application to provide speech input/output capabilities.

Likewise, it is beneficial if native events on the terminal device detected through the created user interface will be processed and accumulated within the user interface application until a service trigger for the cloud-based application can be triggered based on the accumulated events. Thus, detected events will be managed directly within the user interface application until a service request has to be transmitted or can be transmitted to the cloud-based application. This minimizes communication overhead.

In accordance with a further aspect, the user interface is created by the user interface application based on a constraint for the cloud-based application that is associated with a user (e.g. in a user profile). This has the advantage that the user interface can be adapted to a specific user profile or to include only the service options that should be available to the particular user.

In accordance with a further aspect, a terminal device is proposed, comprising a processor, an input unit and an output unit. The terminal device is configured to execute a device specific user interface application. The user interface application is configured to retrieve a terminal device independent interface description for a cloud-based application, wherein the interface description describes access to and interaction with the cloud-based application from a terminal device for a plurality of user interaction modalities. The user interface application is further configured to configure or create a user interface on the terminal device for interacting with the cloud-based application based on the retrieved interface description and user interface capabilities of the device; and to map a user interaction received through the configured user interface to a command of the cloud-based app based on the retrieved interface description, or to map a command received from the cloud-based app based on the retrieved interface description into an 10 event on the user interface of the terminal device. Further, the device is configured to access the cloud-based application from the terminal device through the created user interface and the user interface application.

In accordance with this aspect, the user interface application on the terminal device may be configured to retrieve an interface description for each one of a plurality of cloud-based applications of a user, and to create a user interface on the terminal device for each one of the plurality of cloud-based applications. The user interface application may further be configured to map possible input modalities for the cloud-based application as described in the user interface description to available input modalities of the input unit, and to map possible output modalities for the cloud-based application as described in the user interface description to available output modalities of the output unit.

The user interface application may be configured to receive an input event from the input unit, e.g. an input event associated with an input filed of the user interface. The user interface application may further be configured to generate a command for the cloud-based application based on the interface description, and send the command via a communication network to the cloud-based application to invoke a respective processing function on the server computer in the cloud where the cloud-based application is executing. The user interface application may be configured to receive a command from the cloud-based application via the communication network and generate a native output event for the output device, e.g. for displaying information on the user interface.

A further aspect relates to a server which provides a cloud-based application to one or more terminal devices. The server stores a terminal device independent interface description for the cloud-based application, which can be retrieved by a user interface application operating on a terminal device, e.g. via a communications network. The server may receive commands from the terminal device to access the cloud-based application and execute respective functions. The server may send data and/or user input requests to the terminal device where the user interface application generates native output instructions on a generated user interface of the terminal device.

It will be appreciated that the above terminal device and server may be combined with the previous aspects described in connection with the method to form further embodiments. In other words, device and method aspects can be interchanged in embodiments.

These and other aspects of the invention will be apparent from and elucidated with reference to the embodiments described hereinafter, by way of example, with reference to the drawings.

### Brief Description of Figures

The invention is explained below in an exemplary manner with reference to the accompanying drawings, wherein
Fig. 1 shows a flow diagram of steps of a method according to an embodiment;
Fig. 2 illustrates a system architecture for providing a cloud-based application to one or more terminal devices according to an embodiment;
Fig. 3 illustrates the application layers for providing a cloud-based application to one or more terminal devices according to an embodiment;
Fig. 4 illustrates the user interaction and the communication between the user interface app and the cloud-based app according to an embodiment; and
Figs. 5A to 5C illustrate the cloud-based application flow according to an embodiment.

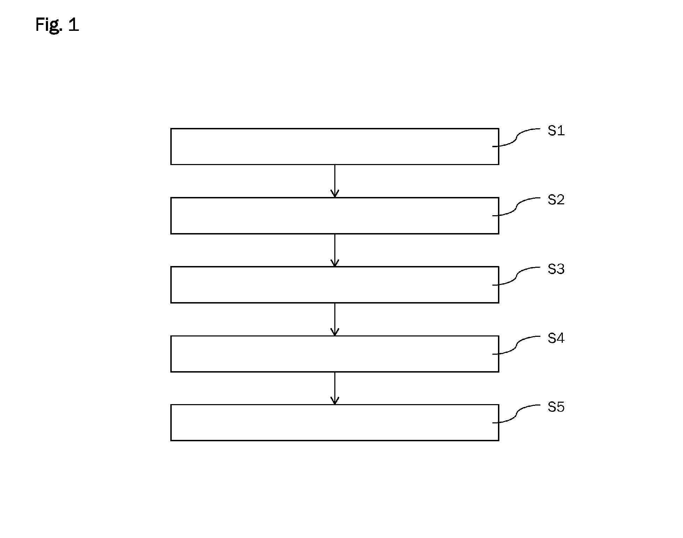

Fig. 1 illustrates the main steps of a method according to an embodiment. In step S1, a device specific user interface application is deployed on a terminal device of the user. The user interface application is generic in the sense that it does not comprise any specific business logic or functionality for a certain task, such as email, calendar, contacts, navigation and location-based services, etc. Instead, the user interface application is designed to interact with at least one cloud-based application providing these kinds of functionality. The deployed user interface application is, however, device specific in that the user interface application is programmed to include knowledge on the available device capabilities, in particular the device APIs and the available user interaction modalities.

In step S2, the user interface application receives a terminal device independent interface description for a cloud-based application, wherein the interface description describes access to and interaction with the cloud-based application from a terminal device for a plurality of user interaction modalities. This has the advantage that the cloud-based application can be provided in a device-independent way avoiding the need to provide different versions of the same cloud-based app for different device APIs.

In step S3, the user interface application creates and/or configures a user interface on the terminal device for interacting with the cloud-based application based on the retrieved interface description and the user interface capabilities of the device.

In step S4, a user interaction received through the configured user interface is mapped to a command of the cloud-based app based on the retrieved interface description and in step S5, the cloud-based application is accessed from the terminal device through the created user interface by transmitting the command to the cloud-based app.

Thus, instead of implementing a specific user interface for each device, the application developer develops the back-end consisting of the business logic and the data handling functions. This functionality could run in dedicated servers or a cloud-based infrastructure. Instead of providing an HTML front-end or a device dependent front-end application, a descriptive format is used where for each interaction medium, such as speech, haptic, video, etc. the available interaction steps and event handlers are described. It is a particular advantage that the device interaction is provided by the cloud-based app in a device independent way, so that a client device that is not able to serve a specific modality will dismiss the respective information on this modality. On the client device, the generic front-end app (user interaction application) is deployed, that will load the interface description from the cloud-based application, interpret the description and map the different options on the actual available capabilities of the device. This can be done using an event driven programming model in a way that a recognized user interaction (e.g. a command recognized by a speech recognition engine) is triggering an event handler in the client's generic user interface application. This event handler will provide means to communicate with the cloud-based back-end to trigger the requested application function.

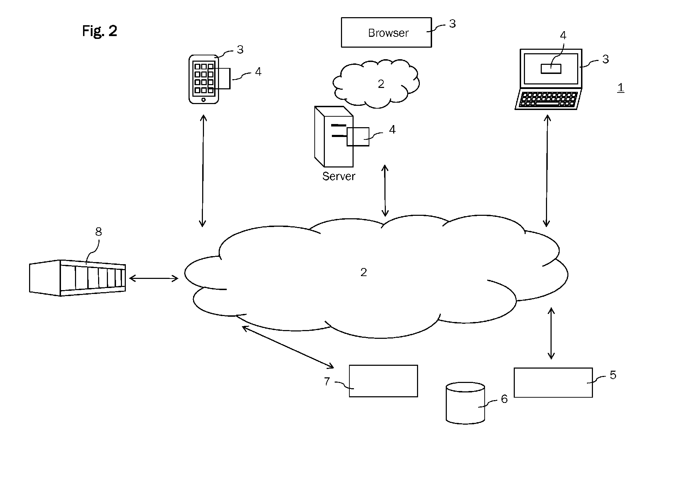

The interaction with the generic user interface application and the cloud-based application is illustrated in more detail in Fig. 2 that illustrates a system architecture for providing a cloud-based application to one or more terminal devices.

The user interface application 4 can be deployed on different types of terminal devices 3, e.g. on a smart phone, a tablet computer, a web server accessed via a web browser, a laptop computer, or a television set (with or without a set-top box). Since different terminal devices have different capabilities for managing a user interaction, the user interface application is specific for the particular terminal device onto which it is deployed. The back-end business apps 5 are cloud-based, i.e. they are stored e.g. in a back-end database 6 at a remote location from the terminal devices 4. Likewise, the user interface description 7 for the respective cloud app is also stored in a database 6 and/or may be provided directly by the cloud-based application 5 upon a corresponding request from the user interface application 4.

The user interface application 4 deployed on a terminal device 3 is configured to receive the user interface description 7, including the business application's presentation layer and data in the form of forms and event handlers over a network 2.

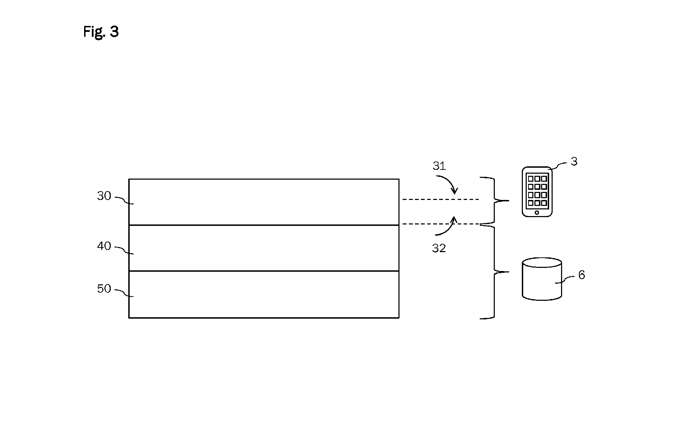

Fig. 3 illustrates the main application layers for providing a cloud-based application to one or more terminal devices according to an embodiment. The first layer 30 is the user interaction layer through which the user of the terminal device 3 interacts with the business app (cloud-based app). The user interaction layer 30 resides on the terminal device 3. The application layer 40 and the database layer 50 are cloud layers, i.e. the respective applications and database information are stored on central servers or databases 6 and are accessed via a network 2 by the terminal device 3. The business app is located in the application layer 40 and can access further sub-applications and databases.

The user interaction layer 30 is adapted to the specific device capabilities. By way of example, the user interface description of the cloud-based app specifies a set of possible interaction modalities through which a user can interact with the cloud-based app. If the user interaction app determines that the terminal device can be controlled through all the possible interaction modalities, then the user interface 31 for this app is adapted by the user interface app so that it includes all possible interaction modalities. In case that the terminal device is capable of only providing a sub-set of the user interface modalities, then a user interface 31 comprising only a sub set of these modalities is implemented. The user inputs and outputs of the created user interface 31 are interpreted and controlled by a respective event handling engine 32 of the user interaction application that is triggering the event handler for interaction with the respective cloud-based apps in the application layer 40.

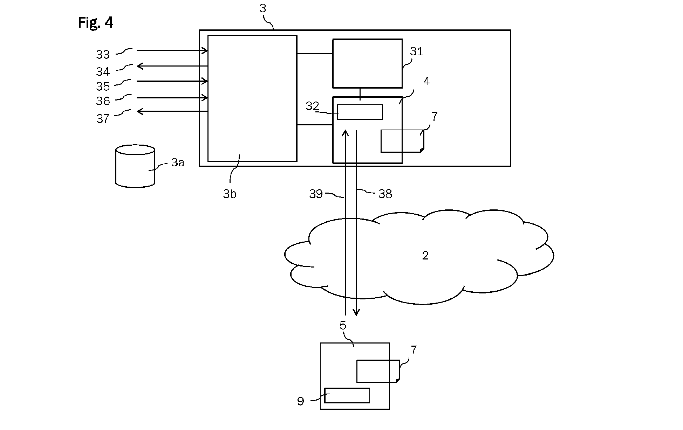

This is further illustrated in Fig. 4 that illustrates the user interaction and the communication between the user interface app 4 and the cloud-based app 5 according to an embodiment. The user interface application 4 that is running within the device-specific run-time environment 3b creates the actual user interface 31 for the cloud-based app 5 in accordance with the received user interface description 7 that may be retrieved directly from the cloud-based app 5 and depending on the device capabilities 3a. The device capabilities 3a may be provided in the form of a device type and operating system specific API for the terminal device. As the user interface application 4 is device dependent, it will have all means to provide a well-adapted user interface 31 for each individual device 3 and extending its capabilities by seamless integration of cloud resources.

By way of example, the user interface description 7 of a specific business app 5 specifies a set of possible interaction modalities through which a user can interact with the cloud-based app. The user interaction app 4 adapts the interaction modalities for interacting with the cloud-based app 5 based on the capabilities of the terminal device 3 and the based on the retrieved interface description 7 of the cloud-based app 5 to create the user interface 31 for the cloud-based app 5 on the terminal device 3. In the present example shown in Fig. 4, the user interface 31 is configured by the user interface application to receive a voice input 33, a touch or key pad input 35 or a gestic or haptic input 36 and to output a voice command 34 or a graphic output 37 since these input/output modalities are available for the particular terminal device 3 and also supported by the cloud-base app 5 as defined in the interface description 7.

An event driven programming model is used for controlling the interaction between the user interface application 4 and the cloud-based application 5, wherein a recognized user interaction at the device 3 is triggering an event handler 32 in the user interface application 4 which then provides means to communicate with the cloud-based application 5 to trigger the requested application function. When using a web frontend, the user interface will be exposed to the client's device browser using standard HTML principles. Smartphones can host basic event handlers on the device itself. The user interface application will trigger and process the local user interface or sensor data.

The event handler 32 maps and translates the user input into a command string 38, e.g. using an XML format, based on the received user interface description 7 from the respective business app 5. By way of example, depending on the capabilities of the terminal device and depending on the type of user interaction, user interface event handlers will be retrieved and configured either on the terminal device or in cloud data center 8. For example, more advanced event handlers, e.g. to support speech recognition may be allocated in servers of a cloud data center 8 as shown in Fig. 2A in order not to burden the limited device resources with resource-intensive voice recognition calculations that also require large language databases. According to a further aspect, detected events can be updated within the user interface application 4 until a service trigger for the business app 5 can be triggered. A service request or command 38 is then transmitted from the user interface application 4 to the business app 5 in order to trigger the requested application function of the business logic.

In response to the received command 38, the business app 5 will operate according its service or business logic 9 and will provide the data and the presentation format for next interaction step to the user interface app 4 using the return XML command 39. Thus, the remote business app 5 sends a response 39, using an XML command, back to the terminal device 3. The response 39 is interpreted by the event handler 32 based on the underlying programming model and user interface description 7 and translated into a user output 34, 37.

As already mentioned above, the user interface application 4 is generic in the sense that it does not comprise any specific business logic 9 since the specific business logic resides within the cloud-based app 5. Instead, the user interface application is designed to configure a user interface of a specific terminal device for interacting with one or more cloud-based applications 5. The deployed user interface application 4 is, however, device specific in that the user interface application 4 is configured to include knowledge on the available device capabilities 3a, in particular the device APIs and the available user interaction modalities of the device.

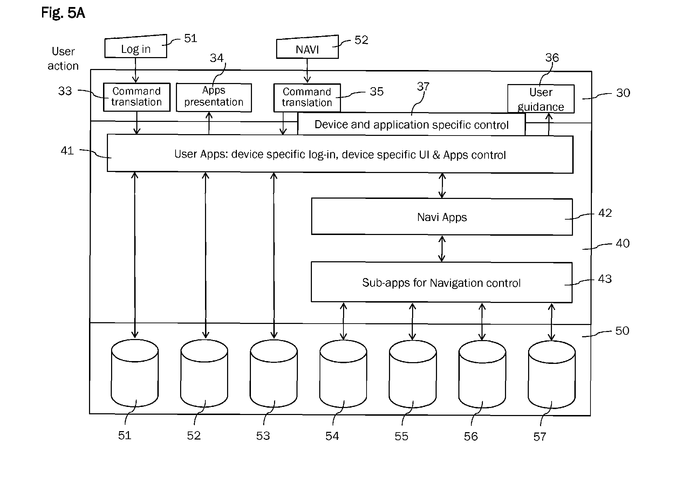

Figs. 5A to 5C illustrate the cloud-based application flow according to an embodiment. For illustration purposes, a navigation app is used as an example for a cloud-based app. It will be appreciated that the present invention is not limited to this specific example.

A login functionality 51 is provided on the terminal device 3. When a user logs in at a specific device 3, a command translation unit 33 interprets the login data and accesses a user constraints database 51 to determine, based on the user login data, which apps and/ or which service levels for the respective apps are available to the user. Typically, the device specific user interface app is already installed on the terminal device when the user logs in. Initially, it may be retrieved from the database 53 that stores the device specific generic user interface apps, downloaded and installed on the terminal device 3. After the login, the user interface app downloads the available apps for the user from the user apps database 52 and adapts the apps in the current user environment and constraints using the apps presentation unit 34. For example, if the user logs in for the first time on a new smartphone, a list of available/subscribed cloud based apps is automatically downloaded on the new device. Then, user interface descriptions for all cloud-based apps of the user are automatically downloaded and used to configure the cloud-based apps on the new device. For example, the user subscribes to (or buys) a cloud-based navigation app as a so-called service app. A navigation user interface 52 is then created on the terminal device. It is noted that the apps in the application layer 40 have to be provided only once per user.

Based on the user interface description of the navigation app and the specific capabilities of the terminal device, the user interface app uses a command translation unit 35 that interprets input commands for the navigation app. Likewise, an output user guidance unit 36 is created to output the navigation commands for the user.

The user interaction app provides a device and application specific control unit 37 that converts the user inputs into service triggers for the navigation app 42 using the user interface description of the navigation app 42. The navigation app 42 can invoke further sub apps for navigation control 43 and /or can access the database layer 50 that contains all the relevant information, items and conditions for providing navigation guidance to a user. By way of example, the database layer 50 may comprise various databases for retrieving navigation data 54, timetable information 55, environmental conditions 56 or specific user constraints 57 for the use of the navigation app 42, e.g. whether or not the user has purchased access to a particular country map or service.

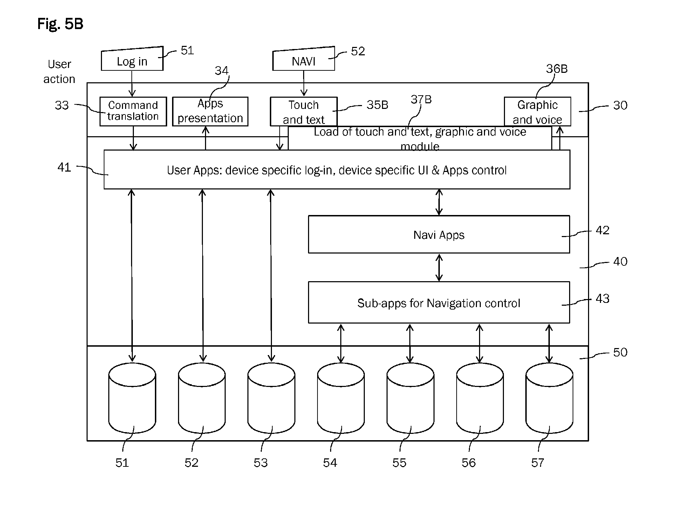

Fig. 5B illustrates the example of the cloud-based navigation app of Fig. 5A for use in connection with a smartphone. A typical smartphone allows for touch, voice and text-based user interface modalities. Thus, the device and application specific control unit 37 loads the touch and text, graphic and voice modules 37B to adapt the user interface to the smartphone capabilities. For example, the command translation unit 35 is configured as a touch and text user input interface 35B. Likewise, the user guidance 36 output unit is adapted based on the smartphone capabilities to have both graphic and voice output commands 36B.

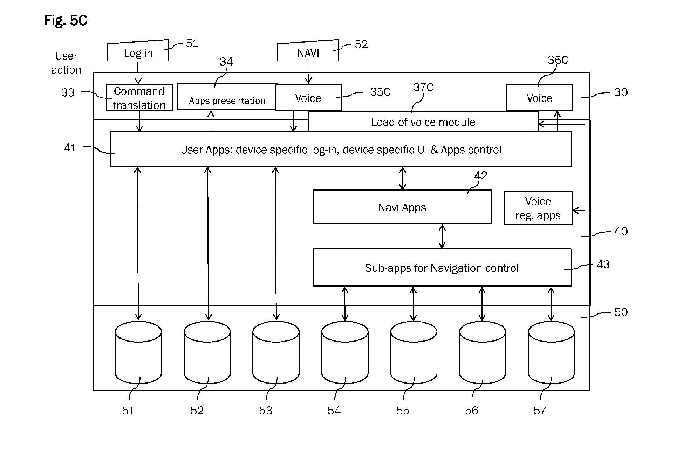

By contrast, Fig. 5C illustrates a terminal device that is voice-controlled only. In this case, the user interface app only loads the voice module 37C so that inputs for the navigation module are voice based 35C. Likewise, navigation directions created by the navigation app 42 are outputted as voice commands 36C only.

As illustrated by the above example, the user interface app receives the business app presentation layer and data, and based on the specific device capabilities, the user interface app will create the actual user interface depending on the device capabilities. When a user logs in at a specific device, the user interface app downloads and adapts the available apps in the current user environment and constraints.

In the following, the embodiments above are further illustrated using simple XML examples to illustrate the interaction between a generic, but device specific user interaction app and a device independent business app (e.g. navigation app). First, an example for a login procedure is disclosed.

The login application requests the user to submit a user identification and the credentials to authenticate the access to the underlying service. The user might be prompted by a text/graphic user interface (UI) to enter his password or depending on the device capabilities the user will be able to provide a biometric feature as authentication. As such an authentication procedure is commonly used by a multitude of services, the user interface app (also called UIApp) provides a generic template for this dialog step. The following XML document is provided by a specific app (in this case the IoginApp) and contains the information needed to be interpreted by the UIApp.

The XML document provided by the business app (the cloud-based app) describes at least one dialog step to update the presentation to the users and/or a set of commands that a user may use to interact via the UIApp with the business app. Each dialog step will contain an "action" that instructs the UIApp where information captured from the user should be submitted. Each dialog step composes a specific interaction step which will instantiate the items using the information about the different modalities. Scripting is used to provide local processing before interacting with the target app, e.g. to validate user input, etc.

```
 <UIApp:UIApp version="1.0"
 xmlns:UIApp =http://www.alcatel-lucent.com/UIApp
 xmlns:xsi="http://www.w3.org/2001/XMLSchema-instance"
 xsi:schemaLocation="http://www.alcatel-
 lucent.com/UIApp.xsd"
 xmlns="http://www.sampleApp.com/LoginApp">
 <uiapp:dialog id ="dl" type="form">
 <uiapp:item name="userID"
 default="uiapp.appsdata.uiapp.last-user"
 uiapp:mode="voice, text" >
 <uiapp:voice type="keywords" uiapp:prompt="Please enter
 user name" uiapp:grammar="names.gram" > %%explicit
 UI description for voice
 <uiapp:text prompt="user name:" size=20 validate=
 "doc.Script.checkName">
 </uiapp:item>
 <uiapp:item name="pass" uiapp:template="password"
 params="doc.uiapp.user" >
 %%reuse existing template containing all alternative
 modalities (voice, fingerprint, text, face detect)
 <uiapp:action name="verify" type="submit"
 target="apps.wwwsampleappcom.loginApp"
 params="doc.uiapp.user, doc.uiapp.pass">
 </uiapp:diaiog>
 </UIApp:UIApp>
```

In the above example the loginApp requests the UIApp to request in a dialog two dialog items from the user: a.) a valid userID and b.) the credentials to authenticate the userID.

The item userID may be provided by either text/graphic input or voice input. If no userID is provided a default value (in this case the last userID provided to the UIApp) may be used. Using text as modality, an editable field with a maximum length of 20 characters is presented to the user asking for the user name ("user name:"). The result is validated by script, to check if the user name consists only of alphanumeric values to avoid malicious input.

The voice modality will prompt the user, by using a text to speech synthesis of the prompt text and grammar of eligible names as grammar for a speech recognition process.

The second item requested contains a valid credential. As this is a common request for several applications the UIApp has a stored template that can be re-used. This template provides means for using e.g. biometric features that can be used on the desired device like fingerprint sensor, face recognition or speaker identification. The template may have a standard editable text field to provide the password as a text. For biometric identification the user name may be used to already verify the provided features by e.g., comparing them with locally stored features.

After both items (userID and password) have been provided by the user, the UIApp will submit the data to the business app (loginapp.samplesapp.com). The business app will then provide the next dialog step depending on the business logic (e.g. the service app in case the login was successful or an access denied dialog if the login failed).

In the following, an example for a navigation app is provided.

In an interactive mode, e.g. during driving, the user will see the map and driving directions on a smart device, or some text is displayed, and the user can interact with the navigation app. If speech is enabled, the navigation app will verbally announce/speak direction commands as retrieved from the route information triggered by the GPS sensor.

On a more simplistic device, the user will see just the next navigation steps. The user can select a command, e.g. to end navigation, to change the destination or to get traffic information. The UIApp will interpret the tags and provide the interaction depending on the device capabilities.

```
 <UIApp:UIApp version="1.0"
 xmlns:UIApp =http://www.alcatel-lucent.com/UIApp
 xmlns:xsi="http://www.w3.org/2001/XMLSchema-instance"
 xsi:schemaLocation="http://www.alcatel-
 lucent.com/UIApp.xsd"
 xmlns="http://www.sampleApp.com/NavigationApp">
 <uiapp:dialog id ="il" type="presentation">
 <uiapp:image id="imagel" name="map" type="png"
 src=" http://www.sampleApp.com/NavigationApp
 /Stuttgart.png" >
 <uiapp:item id="directions" type="navApp:routeData"
 src= http://www.sampleApp.com/NavigationApp
 /user1234/track27.rte" mode="voice, text, image" >
  
 <uiapp:voice type="tts" trigger="device.gps-
 sensor.onUpdate()"
 prompt=doc.navApp.directions.getText()>
 <uiapp:text prompt=
 doc.navApp.directions.getNextLine()
 trigger="device.gps-sensor.onUpdate()">
 <uiapp:image layer=1 type="svg" src=
 doc.navApp.directions.geSVG() >
 </uiapp:item>
 <uiapp:item id="commands" type="menu"
 mode="voice,text">
 <uiapp:menuentry id="1"> End Navigation </
 uiapp:menuentry>
 <uiapp:menuentry id="2"> Get Traffic Info </
 uiapp:menuentry>
 <uiapp:menuentry id="3"> Change Destination </
 uiapp:menuentry>
 <uiapp:voice type="keyword" grammar =" #commands">
 <uiapp:text type="select" prompt =" #commands">
 </uiapp:item>
 <uiapp:action id="command" trigger="onUserInput"
 target="apps.wwwsampleappcom.NavApp"
 params=doc.uiapp.commands.selected >
 <uiapp:action id="destination reached" trigger=
 doc.navApp.directions.getNextLine()==EOF
 target="apps.wwwsampleappcom.NavApp"
 params="atDestination" >
 </uiapp:dialog>
 </UIApp:UIApp>
```

The second example provides the interface description for a navigation Application. In a previous step the user has provided information to generate a route from its current location to the desired user specified destination. The navigation app has generated a path list, e.g. using a standard XML format like GPX or KML data.

For a graphic device, the UIApp is able to present the map and the driving direction by overlaying the route information of a map provided as a graphical image using a scalable vector graphic (SVG) format, allowing additional interaction like zooming etc.

For text input the UI will regularly check the GPS position and depending on the waypoints provided as route information show the next information when appropriate (e.g. in 300 m turn left) . Finally a Text-to-speech synthesis may be used for when no graphical or text interface is available. The user may interact with the system e.g. to change the destination address, to end the navigation or to request traffic information. This can be presented either as a menu or by voice input. Here the grammar is generated on the fly from the provided menu items.

The UIApp will return to the business app in case a) the destination is reached or b) in case the user has selected a command.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and devices and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described devices can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of providing a cloud-based application to one or more terminal devices of a user, comprising:
deploying a device specific user interface application (4) on a terminal device (3) of the user;
retrieving, by the user interface application (4), a terminal device independent interface description (7) for a cloud-based application (6), wherein the interface description (7) describes access to and interaction with the cloud-based application (6) from a terminal device (3) for a plurality of user interaction modalities;
configuring, by the user interface application (4), a user interface on the terminal device for interacting with the cloud-based application based on the retrieved interface description (7) and user interface capabilities of the terminal device (3);
mapping a user interaction received through the configured user interface to a command of the cloud-based application based on the retrieved interface description (7); and
accessing the cloud-based application (6) from the terminal device (3).

2. A method according to claim 1, wherein the terminal device independent interface description (7) for the cloud-based application (6) is provided in a descriptive format, wherein for each interaction modality, the available interaction steps and event handlers are described in the interface description.

3. A method according to any of the preceding claims, further comprising:
controlling interaction between the user interface application (4) and the cloud-based application (6) using an event driven programming model,
wherein a recognized user interaction is triggering an event handler in the user interface application which then provides means to communicate with the cloud-based application (6) to invoke the requested application function.

4. A method according to any of the preceding claims, wherein the user interaction received through the configured user interface is mapped to a generic terminal device independent user interaction described in the retrieved interface description (7) and then mapped to a command of the cloud-based application (4).

5. A method according to any of the preceding claims, wherein a device specific user interface application (4) is deployed on each of a plurality of terminal devices (3) of the user, further comprising: when a user logs in at one of the plurality of terminal devices, determining, by the respective user interface application, the remote cloud-based applications (6) that are available to the user based on user information and creating the user interfaces for the available cloud-based applications (6) based on the retrieved interface description (7) for each one of the plurality of available cloud-based applications.

6. A method according to any of the preceding claims, further comprising:
in response to the command generated for the user interaction and
received at the cloud-based application from the user interface application (4), transmitting output data and / or an input request and a presentation format for a next interaction step from the cloud-based application to the user interface application; and converting the received output data and /or input request into a user output by the user interface application based on the received presentation format.

7. A method according to any of the preceding claims, wherein a plurality of cloud-based applications (6) are provided and the user interface application (4) creates a different user interface on the terminal device (3) for each one of the plurality of cloud-based applications based on the user interface capabilities of the terminal device (3) and the retrieved interface description for each one of the plurality of cloud-based applications (6).

8. A method according to any of the preceding claims, wherein the user interface application (4) receives the interface description from the cloud-based application (6) via a communications network (2).

9. A method according to any of the preceding claims, wherein the user interface application (4) creates the user interface on the terminal device (3) for interacting with the cloud-based application (6) based on available user interface modalities of the terminal device (3).

10. A method according to any of the claims 2 to 9, wherein events detected
through the created user interface are processed within the user interface application (4) until a service trigger for the cloud-based application (6) can be triggered.

11. A method according to any of the preceding claims, wherein the user
interface is created by the user interface application (4) based on a user constraint for the cloud-based application (6).

12. A terminal device, comprising a processor, an input unit and an output
unit, wherein the terminal device (3) is configured to:
execute a device specific user interface application (4), wherein the user interface application (4) is configured:
to retrieve a terminal device independent interface description (7) for a cloud-based application (6), wherein the interface description (7) describes access to and interaction with the cloud-based application (6) from the terminal device (3) for a plurality of user interaction modalities;
to configure a user interface on the terminal device (3) for interacting with the cloud-based application based on the retrieved interface description (7) and user interface capabilities of the terminal device (3);
to map a user interaction received through the configured user interface to a command of the cloud-based application based on the retrieved interface description (7); and
to access the cloud-based application (6) from the terminal device (3) through the created user interface and the user interface application (4).

13. A terminal device according to claim 12, wherein the user interface application is configured to retrieve an interface description for each one of a plurality of cloud-based applications of a user, and to create a user interface on the terminal device for each one of the plurality of cloud-based applications.

14. A terminal device according to claims 12 or 13, wherein the user interface application (4) is configured to map possible input modalities for the cloud-based application (6) as described in the user interface description (7) to available input modalities of the input unit and to map possible output modalities for the cloud-based application (6) as described in the user interface description (7) to available output modalities of the output unit.

15. A terminal device according to any of claims 12 to 14, wherein the user interface application (4) is configured to receive an input event from the input unit, generate a command for the cloud-based application (6) based on the interface description (7) and send the command via a communication network to the cloud-based application (6), wherein the user interface application (4) is further configured to receive a command from the cloud-based application (6) via the communication network and generate a native output event for the output device.

## Amended claims

### Amended claims in accordance with Rule 137(2) EPC.

**1.** A method of providing a cloud-based application to one or more terminal devices of a user, comprising:
deploying a device specific user interface application (4) on a terminal device (3) of the user;
determining, by the user interface application, the remote cloud-based applications (6) that are available to the user based on user information;
retrieving, by the user interface application (4), a terminal device independent interface description (7) for all available cloud-based applications (6), wherein an interface description (7) describes access to and interaction with the respective cloud-based application (6) from a terminal device (3) for a plurality of user interaction modalities;
configuring, by the user interface application (4), a user interface on the terminal device for interacting with the available cloud-based applications based on the retrieved interface descriptions (7) and user interface capabilities of the terminal device (3);
creating a different user interface on the terminal device (3) for each one of the plurality of cloud-based applications based on the user interface capabilities of the terminal device (3) and the retrieved interface description for each one of the plurality of cloud-based applications (6);
mapping a user interaction received through a configured user interface to a command of the respective cloud-based application based on the retrieved interface description (7); and
accessing the respective cloud-based application (6) from the terminal device (3).

**2.** A method according to claim 1, wherein the terminal device independent interface description (7) for a cloud-based application (6) is provided in a descriptive format, wherein for each interaction modality, the available interaction steps and event handlers are described in the interface description.

**3.** A method according to any of the preceding claims, further comprising:
controlling interaction between the user interface application (4) and a cloud-based application (6) using an event driven programming model,
wherein a recognized user interaction is triggering an event handler in the user interface application which then provides means to communicate with the respective cloud-based application (6) to invoke the requested application function.

**4.** A method according to any of the preceding claims, wherein the user interaction received through a configured user interface is mapped to a generic terminal device independent user interaction described in the retrieved interface description (7) and then mapped to a command of the respective cloud-based application (4).

**5.** A method according to any of the preceding claims, wherein a device specific user interface application (4) is deployed on each of a plurality of terminal devices (3) of the user.

**6.** A method according to any of the preceding claims, further comprising:
in response to the command generated for the user interaction and received at a cloud-based application from the user interface application (4), transmitting output data and / or an input request and a presentation format for a next interaction step from the cloud-based application to the user interface application; and converting the received output data and / or input request into a user output by the user interface application based on the received presentation format.

**7.** A method according to any of the preceding claims, wherein the user interface application (4) receives the interface description from a cloud-based application (6) via a communications network (2).

**8.** A method according to any of the preceding claims, wherein the user interface application (4) creates a user interface on the terminal device (3) for interacting with a cloud-based application (6) based on available user interface modalities of the terminal device (3).

**9.** A method according to any of the claims 2 to 8, wherein events detected through a created user interface are processed within the user interface application (4) until a service trigger for the respective cloud-based application (6) can be triggered.

**10.** A method according to any of the preceding claims, wherein a user interface is created by the user interface application (4) based on a user constraint for the respective cloud-based application (6).

**11.** A terminal device, comprising a processor, an input unit and an output unit, wherein the terminal device (3) is configured to:
execute a device specific user interface application (4), wherein the user interface application (4) is configured:
determine, by the user interface application, the remote cloud-based applications (6) that are available to the user based on user information;
retrieve a terminal device independent interface description (7) for all available cloud-based applications (6), wherein an interface description (7) describes access to and interaction with the respective cloud-based application (6) from the terminal device (3) for a plurality of user interaction modalities;
configure a user interface on the terminal device (3) for interacting with the available cloud-based applications based on the retrieved interface descriptions (7) and user interface capabilities of the terminal device (3);
create a different user interface on the terminal device (3) for each one of the plurality of cloud-based applications based on the user interface capabilities of the terminal device (3) and the retrieved interface description for each one of the plurality of cloud-based applications (6);
map a user interaction received through a configured user interface to a command of the respective cloud-based application based on the retrieved interface description (7); and
access the respective cloud-based application (6) from the terminal device (3) through the created user interface and the user interface application (4).

**12.** A terminal device according to claim 11, wherein the user interface application (4) is configured to map possible input modalities for a cloud-based application (6) as described in the respective user interface description (7) to available input modalities of the input unit and to map possible output modalities for the cloud-based application (6) as described in the respective user interface description (7) to available output modalities of the output unit.

**13.** A terminal device according to claims 11 or 12, wherein the user interface application (4) is configured to receive an input event from the input unit, generate a command for a cloud-based application (6) based on the respective interface description (7) and send the command via a communication network to the cloud-based application (6), wherein the user interface application (4) is further configured to receive a command from a cloud-based application (6) via the communication network and generate a native output event for the output device.
